# EUROPÄISCHE PATENTSCHRIFT

(11) **EP 2 988 043 B1**
(45) Veröffentlichungstag und Bekanntmachung des Hinweises auf die Patenterteilung: **07.03.2018**
(21) Anmeldenummer: 15000978.5
(22) Anmeldetag: 07.04.2015
(51) Int. Cl.: F16K 24/04, B01D 19/00, F24D 19/08

(54) **ANSCHLUSSSTÜCK MIT ELASTOMERMEMBRAN-ENTLÜFTER**
CONNECTING PIECE WITH ELASTOMER MEMBRANE VENT
PIÈCE DE RACCORDEMENT AVEC VENTILATEUR À MEMBRANE ÉLASTOMÈRE

(30) Priorität: 11.08.2014 DE 202014006323 U
(43) Veröffentlichungstag der Anmeldung: 24.02.2016
(73) Patentinhaber: Wilhelm Schauerte GmbH & Co. KG, 57368 Lennestadt (DE)
(72) Erfinder: Schauerte, Stefan, DE - 57368 Lennestadt (DE)

(56) Entgegenhaltungen:
- WO-A1-03/008849
- DE-A1-102006 021 454
- DE-U1- 20 104 315
- DE-U1- 20 313 142
- DE-U1-202004 001 139
- DE-U1-202011 109 189

## Beschreibung

Die Erfindung betrifft ein Anschlußstück mit weiteren Funktionen für eine wassertechnische Einrichtung - insbesondere ein 3-Wege- oder T-Anschlußstück mit einem Elastomermembran-Entlüfter.

Anschlußeinrichtungen und Anschlußstücke werden in der Installationstechnik in wassertechnischen Anlagen wie für sanitäre Einrichtungen, Warmwasser- und Heizungsanlagen in vielfältiger Form benötigt. Rohrleitungsübergänge benötigen Kupplungs- und Verbindungsstücke, Durchmesserveränderungen von Rohrleitungen benötigen Reduzierstücke, Leitungs-Verzweigungen benötigen T-Stücke und Verbindungen von wassertechnischen Einrichtungen und Geräten mit Rohrleitungen werden mittels Anschlußstücken hergestellt. Die Anzahl der anschließenden Einrichtungen an solche Anschlußstücke ist so vielfältig wie die Anzahl leitungsmäßiger Zu- und Abgänge. Im vorliegenden Fall handelt es sich beispielhaft um je einen leitungsmäßigen Zu- und Abgang sowie den Anschluß oder die Verbindung an einen/zu einem Elastomermembran-Entlüfter.

Es handelt sich dabei jedoch nicht nur um eine einfache leitungsmäßige Durchgangsverbindung mit einer Geräte- oder Einrichtungs-Anschlußmöglichkeit, sondern im Bereich des Anschlusses wird noch weitere Funktionalität gefordert und dazu sind leitungsmäßige Hindernisse, Umleitungen, Schikanen oder Sperren vorgesehen. So sei an dieser Stelle beispielhaft für eine heizungstechnische Anlage vorgetragen, daß Flachheizkörper aus Platten aufgebaut sind und diese Hohlkörper parallel oder seriell mit Wasser versorgt werden können. Bei der Parallelschaltung der Heizkörperplatten werden dieselben durch Rohrleitungen so verbunden, daß das Wasser gleichzeitig in den Platten steigt und es an höchster Stelle eine Rohrverbindung zwischen den Platten mit einer Entlüftung gibt. Bei der Serienschaltung muß die Rohrverbindung zwischen den Platten so gestaltet sein, daß erst nach der Befüllung der ersten Platte - Vorlauf - das Wasser in die weitere Platte geleitet wird - Rücklauf. Diese Rohrverbindung zwischen den Platten wird üblicherweise durch ein thermisches Ventil volumengesteuert, welches den Wasserfluß bei ausreichender Raumtemperatur unterbricht. Auf der dem Ventil gegenüberliegenden Seite befindet sich ebenfalls eine Rohrverbindung zwischen den Platten mit einer Entlüftungseinrichtung, die nur im Fall des Entlüftens die Verbindung öffnet.

Im folgenden wird der Stand der Technik von Anschlußstücken mit weiteren Funktionen für eine wassertechnische Einrichtung - insbesondere von 3-Wege- oder T-Anschlußstücken mit Elastomermembran-Entlüfter gewürdigt; gemäß dem Stand der Technik sind, je nach Anwendungsbezug, eine Vielzahl von Typen von Anschlußstücken mit weiteren Funktionen für eine wassertechnische Einrichtung - insbesondere ein 3-Wege- oder T-Anschlußstück mit einem Elastomermembran-Entlüfter im Einsatz.

Mit der Patentschrift DE 10 66 722 wird ein T-förmiges Anschlußstück für Heizungsanlagen vorgestellt, mit einer etwa unter dem Abgang für den anzuschließenden Wärmeverbraucher in Hauptstromrichtung schräg angeordneten Ablenkwand für das Warmwasser. Derartige Umlenkungen wurden bereits in gestufter Form in das T-Stück eingebracht mit dem Nachteil ungleichmäßiger Strömung und Wirbelbildung. Bei der vorliegenden erfindungsgemäßen Anordnung wird in das Anschlußstück ein zylinderförmiger Hohlkörper in Hauptstromrichtung eingebracht, dessen abgangsgerichtete Fläche den Sektor einer Kegelmantelfläche bildet, die am oberen Ende in Hauptstromrichtung abknickt und auf beiden Seiten nach unten hin zu einem mit dem Innenumfang des Hauptrohres etwa übereinstimmenden, in Hauptstromrichtung beiderseits offenen Hohlkörper ergänzt ist. Der Hauptstrom teilt sich zu Beginn der Ablenkwand in drei Teilströme - den durchfließenden Teil des Hauptstroms, den zum Abgang umgelenkten Teilstrom und einen durch eine verbleibende kleine Rinne fliessenden stau- und wirbelverhindernden Teilstrom in Hauptstromrichtung.
Die Dimensionierung des Ablenkkörpers bereitet schon deshalb Probleme, daß auf den berechneten nicht einstellbaren Körper vollkommen unterschiedliche wärmebedarfsabhängige Strömungen treffen; auch der zum Abgang umgelenkte Teilstrom ist vom örtlichen lokalen Wärmebedarf abhängig. Die Fertigung des Körpers und seine lagegerechte dauerhafte Einbringung in das T-Stück sind aufwendig. Eine steuernde Ventilanordnung ist nicht vorgesehen.

Die Offenlegungsschrift DE 22 08 204 behandelt ein Anschlußstück für einen zweireihigen Heizkörper der Besonderheit, daß das erfindungsgemäße Anschlußstück gegenüber dem handelsüblichen T-Stück den Abstand zweier paralleler Heizkörperplatten um zirka die Hälfte schrumpfen läßt. Darüber hinaus sieht das T-Stück bei Einbau im Heizungsvorlauf den Anschluß eines Betätigungsventils sowie die Einbringung eines Entlüftungsventils im Heizplatten-Verbindungskopf vor. Erreicht wird die Platten-Abstandsverringerung einerseits durch Veränderung des Anschlußrundprofils des T-Stücks in ein Rechteckprofil für die Heizplattenmontage und andererseits durch erhebliche Tiefe-Reduzierung des Heizplatten-Anschlußgewindes.
Die Profiländerung wirkt sich volumenreduzierend und ggf. geräuschemittierend auf den Wasserdurchfluß aus, auf jeden Fall sind starke Verwirbelungen an der Übergangsstelle zu erwarten. Das stark reduzierte Heizplatten-Anschlußgewinde setzt beim Heizkörper ebenfalls verkürzte Überwurfmuttern für den Anschluß voraus, was eine Erhöhung der Typenvielfalt bedeutet. Das Anschlußstück läßt eine serielle Befüllung der Heizkörperplatten nicht zu; das Entlüftungsventil im Verbindungskopf kann nur beide Heizplatten gleichzeitig be-/entlüften.

Die deutsche Offenlegung DE 28 03 363 / Gebrauchsmuster DE 78 02 277 und Gebrauchsmuster DE 78 02 144 offenbaren ein Anschlußstück für den Anschluß einer das Heizmedium führenden Leitung an ein-, bevorzugt zweilagige Heizkörper vor, wobei das Anschlußstück aus einem zum Anschluß an die Heizplatte(n) bestimmten Verbindungsteil und einem damit verschweißten, zum Anschluß an die Leitung des Heizmediums bestimmten Anschlußteil besteht, wobei das Verbindungsteil durchgehend aus einem zylindrischen Rohrstück besteht, daß in der Mantelfläche desselben ein Ausschnitt vorgesehen ist und daß das Anschlußteil an einem seiner Enden Stirnkanten von einer solchen Formgebung aufweist, daß sie den Ausschnitt umgebend, satt auf dem Rohrstück aufliegend mit diesem verschweißt sind bzw. daß auf die Stirnfläche(n) des Verbindungsteils ein Lötanschlußstück angeschweißt ist. Die Veröffentlichungen widmen sich den Herstellungsverfahren T-förmiger Anschlußstücke; kein Hinweis auf Anlagentechnik mit Entlüftung.

Die spanische Anmeldung ES 2 025 436 zeigt einen einstückigen Anschluß für Vor-/ Zulauf und Rück-/Ablauf von Heizkörperplatten, beispielhaft ausfgeführt in L- und in T-Form. Beim L-Anschluß ist die Abgangsseite zweikanalig ausgeführt und eingangsseitig bildet das Steigrohr einen Kanal und außen um das Steigrohr ist der zweite Kanal angeordnet. Beim T-Anschlußstück weist der Mittenanschluß zwei Schikanen auf, die der einstückigen Aufnahme des Steigrohrs dienen, so daß das Medium einerseits über eine Zulaufseite des Anschlußstücks in das Steigrohr geleitet wird und andererseits der Kanal zwischen Steigrohr und Mittenanschluß als Ablauf über die zweite, die Ablaufseite des Anschlußstücks führt.
Wesenszüge der T-Anschlußstück-Konstruktion können auch ansatzweise für die Entwicklung eines derartigen Entlüftungsventils genutzt werden; in der Veröffentlichung ist die Entlüftung nicht berücksichtigt.

Gebrauchsmuster DE 295 03 555 / DE 295 00 101 stellt ein Anschlußelement für einen Heizkörper vor, die insbesondere bei Flach- oder Plattenheizkörpern zur Verbindung von Heizplatten mit Vor- und Rücklaufleitungen oder mit einem Steuerventil benötigt werden. Bei Flachheizkörpern werden insbesondere L- oder T-förmige Anschlußrohrstücke verwendet. Diese Anschlußrohrstücke werden einerseits an den Heizkörper angeschweißt, wodurch eine dichte und mechanisch stabile Verbindung entsteht; zur Verbindung mit den Rohrleitungen wird oft auch ein Gewindeanschluß vorgesehen.
Es wird vorgeschlagen, das Anschlußelement als Kunststoff-Formteil mit wenigstens einem damit fest verbundenen Metalleinsatz auszuführen; über die Belegung der Anschlüsse werden keine Vorgaben gemacht.

Die deutsche Patentschrift DE 196 14 330 präsentiert einen mehrlagigen Plattenheizkörper oder eine -gruppe mit integrierter Ventilgarnitur für Zulauf, Ablauf, Ventilsteuerung und Entlüftung derart, daß der Heizkörperzulauf und -ablauf bodenseitig mit dem Heizungsvor- und -rücklauf verbunden sind, daß die beiden Platten oder Plattengruppen nur über ein als Ventil ausgebildetes Verbindungsstück an dem oberen, dem Boden entgegengesetzten Plattenende strömungstechnisch verbunden sind und an dem weiteren oberen Ende der rechtwinkligen Plattenanordnung Entlüftungsvorrichtungen - drei Varianten - vorgesehen sind, wobei die erste, mit dem Heizungsvorlauf verbundene Platte den Vorlaufkanal und die zweite, mit dem -rücklauf verbundene Platte den Rücklaufkanal bildet und die serielle Füllung der Platten über die Ventilanordnung erfolgt.

Eine Entlüftungsvorrichtung sieht eine von der anderen Heizungsplatte unabhängige Entlüftung über je ein L-Stück vor; eine weitere Variante sieht ein die beiden Heizungsplatten verbindendes Rohrstück vor, welches in seiner Mitte ein Kugelventil mit L-Durchgang aufweist, so daß je nach Ventilstellung durch Drehen die Funktionen 'Geschlossen', 'Platte 1 geöffnet' oder 'Platte 2 geöffnet' eingestellt werden können. Bei der dritten Varianten ist in der Mitte des plattenverbindenden Rohrstücks eine Doppelsitzausbildung mit einer radial gerichteten Entlüftungsschraube vorgesehen; diese Funktion bleibt unklar, die angekündigte separate Entlüftung der Platten ist nicht gegeben.

Die deutsche Gebrauchsmusterschrift DE 201 04 315 / europäische Anmeldung EP 1 249 285 stellt ein Verfahren zur Herstellung eines Anschlußteils - insbesondere für einen Heizkörper - mit zumindest zwei Anschlußstutzen, welche an einem Mittelstück angeordnet sind, in welchem eine Strömungsverbindung vorgesehen ist. Gemäß dem Verfahren wird ein Werkstück durch Kaltfließpressen zu einem einstückigen Grundkörper mit einem massiven Mittelstück und mindestens zwei daran angeordneten, rohrförmigen Anschlußstutzen geformt. Als Strömungsverbindung wird mindestens ein Kanal in das Mittelstück eingebracht.
Das Mittelstück gestattet die Aufnahme verschiedener Einrichtungen, wie einen Blindstopfen, einen Ventileinsatz oder einen Entlüftungseinsatz, ist jedoch nicht für eine Dauerentlüftung mit Elastomermembran-Entlüfter ausgelegt.

Gebrauchsmuster DE 20 2009 007 149 beinhaltet ein Anschlußteil für Platten eines Heizkörpers und die Offenlegung DE 10 2011 050 475 ein Ventileinsatzelement für dieses Anschlußteil. Das Anschlußteil weist zwei Verbindungsabschnitte mit jeweils einem endseitigen Öffnungsquerschnitt und einen Ventilabschnitt auf, in dessen endseitigen Öffnungsquerschnitt ein Ventil mit seinem Anschlußabschnitt dichtend einsetzbar ist, wobei im Innern des Anschlußteils ein Rohrabschnitt angeordnet ist, der einen Strömungskanal definiert, der in einem Verbindungsabschnitt mündet, wobei eine innere Mantelfläche des Anschlußabschnitts des Ventils eine äußere Mantelfläche des Rohrstücks oder umgekehrt dichtend umschließbar ist.
Das Ventileinsatzelement besteht aus einem Ventilkörper und einem rohrförmigen Anschlußabschnitt, der mittels eines umlaufenden Dichtungselements dichtend an einen Verbindungsabschnitt des Anschlußteils steuerbar anschließt. Um ein universelles, unabhängig von der Art des Anschlußteils einsetzbares Ventileinsatzelement zu erhalten, besitzt der Anschlußabschnitt zwei umlaufende Dichtungselemente, wobei das erste Dichtungselement an einer unteren Stirnseite des Anschlußabschnitts und das zweite Dichtungselement an einer Mantelfläche des Anschlußabschnitts angeordnet ist.
Gemäß der deutschen Offenlegung DE 10 2012 100 433 / europäische Anmeldung EP 2 525 121 wird ein Ventileinsatzelement zum Einsatz in ein Verbindungs-T-Stück vorgeschlagen, bestehend aus einem Ventilkörper und einem Anschlußabschnitt, der mittels eines umlaufenden Dichtungselements dichtend an einen Verbindungsabschnitt des Verbindungsstücks anschließt, wobei das Dichtungselement sowohl entlang der Längsachse des Anschlußabschnitts betrachtet axial über eine Stirnseite des Anschlußabschnitts als auch radial über eine innere Mantelfläche desselben nach innen und/oder über eine äußere Mantelfläche desselben nach außen vorsteht zwecks Ausgleich von Maßtoleranzen und als Ventileinsatz für Verbindungs-T-Stücke mit stirnseitiger Dichtung.
Anschlußteil und Ventileinsatzelement bilden ein Systembaukasten; das Ventileinsatzelement kann sowohl für Anschlußteile mit stirnseitiger Flachzylinderabdichtung als auch für Anschlußteile mit innerem durchströmten Rohrabschnitt zum Einsatz kommen, wobei die Dichtung an der inneren oder äußeren Mantelfläche des Rohrabschnitts erfolgt. Die Abmessungen des universellen Ventileinsatzelements müssen zunächst an der Flachzylinderabdichtung bemessen werden.

Das deutsche Gebrauchsmuster DE 20 2011 109 189 / europäische Anmeldung EP 2 607 798 beschreibt ein Anschlußstück mit Elastomermembran-Entlüfter für wassertechnische Einrichtungen, insbesondere für die automatische Entlüftung von seriell zu füllenden mehrplattigen Heizkörpern der Haus- und Gebäudetechnik. Das 3-Wege- oder T-Anschlußstück besteht aus einem Anschlußstück mit drei, in einer Ebene liegenden, je um 90° versetzten, von einem Mittelstück des Anschlußstücks ausgehenden Anschlußstutzen 1, 2, 3 , wobei der mittlere Anschlußstutzen 3 einen durch eine aus Übergängen im Mittelstück gebildete konische Dichtfläche einseitig gedichteten, hohlzylinderförmigen Luftstopfen aufweist, der die Medien der Anschlußstutzen 1, 2 innerhalb und außerhalb des Luftstopfens flüssigkeitsdicht getrennt vom Mittelstück bis zum Austritt des Anschlußstutzens 3 führt, wobei das offene, vom Mittelstück abgewandte Ende des Anschlußstutzens 3 Träger eines flüssigkeitsdicht angeschlossenen Entlüftereinsatzes oder Membranentlüfter-Unterteils mit Ventilfunktionen ist, der oder das mit einem flüssigkeitsdicht verschraubten Membranentlüfter-Oberteil versehen, je nach Ventilstellung im Entlüftereinsatz eine wählbare Membrandauerentlüftung der bis dorthin strömungstechnisch getrennt geführten Medien bewirkt. Die Ventilfunktion im Entlüftereinsatz oder Membranentlüfter-Unterteil ist durch einen in axialer Richtung federnd gelagerten Dichtkegel, der eine der dem Anschlußstück abgewandte Bohrung dichtet, durch einen mit dem Dichtkegel einstückig verbundenen Stößel mit dichtringbehaftetem Ventilteller, der gegen die Innenbohrung des Luftstopfens dichtet, sowie durch eine Preßbuchse, die sich auf einer dem Anschlußstück abgewandten Dichtfläche des Luftstopfens mit ihrer unteren Kreisfläche abstützt und mit der oberen Kreisfläche das dem Dichtkegel abgewandte Ende der Feder aufnimmt, um so eine axial gerichtete Kraft zwischen Preßbuchse und Dichtkegel aufzubauen, gestaltet.
Die Teilevielfalt verbunden mit einer zwingend notwendigen, einzuhaltenden Maßhaltigkeit geringer Toleranzbreite zwingt zu einer Verschlankung des Produkts - nicht zuletzt wegen einzuhaltender Stückkosten für ein konsumerorientiertes Produkt.

Be- und Entlüftungsautomaten mit Elastomermembran sind gemäß des Stands der Technik bekannt und bestehen üblicherweise aus einer Deckelkappe, einem Oberteil, einer Membran sowie einem Unterteil. Die Kunststoffteile Deckelkappe und Oberteil sind zweiteilig gespritzt, werden aber durch Fügen und Schweißen, Pressen und/oder Kleben einstückig. Ober- und Unterteil werden miteinander über die zwischengefügte Membran als Einlegeteil mit/ohne Träger oder besser mit im Oberteil im 2K oder Mehr-K (Komponenten)-Verfahren angespritzte Membran als Dichtteil verschraubt. Das vorzugsweise Kunststoff-Unterteil besitzt darüber hinaus ein Kugelventil, welches mittels einer Kugel und einer Schraubenfeder gegen eine Zentralbohrung im Unterteil dichtet, beeinflußt jedoch durch einen Stößel des Oberteils, der je nach Schraubtiefe zwischen Ober- und Unterteil einen Gas- und Flüssigkeitskanal freigibt. Das Unterteil besitzt - ähnlich einer Doppelmuffe - ein weiteres Außengewinde, welches, mit einem Dichtring versehen, die Verbindung zur Heizungs- oder Warmwasseranlage oder sonstigen geschlossenen Rohrkreisläufen bildet.

Die deutsche Anmeldung 'Be- und Entlüftungsautomat mit Membran als Systembaukasten', DE 10 2009 048 402, schlägt als Be- und Entlüftungsautomat mit Elastomermembran 1 eine Entlüftungskappe vor, die in Verbindung mit einem Ventilkörper-Anschlußstück als Dauerentlüftung fungiert. Die Schraubkappe weist einen kleinen Kanal/Bohrung im Deckel auf, der die Verbindung zwischen Ventilinnenraum und Aussenraum herstellt. Außerdem gehört eine semipermeable Membranpatrone zum Geräteumfang, die im Medienkanal positioniert wird und eine Zwangsführung der Entlüftung über die Patrone bewirkt. Weiterhin besitzt die Entlüftungsschraubkappe innen in ihrer Mitte einen Führungsstift als Öffner, der in Abhängigkeit der Kappen-Schraubtiefe auf die federbeaufschlagte Kugeldichtung des Rückschlagventils wirkt und dieses zu Öffnen in der Lage ist. Über die semipermeable Membran werden Gase abgeleitet und flüssige Medien zurückgehalten.

Gemäß der deutschen Patentanmeldung DE 10 2010 051 890 wird angenommen, daß der Be- und Entlüftungsautomat mit Elastomermembran 2, bestehend aus Deckelklappe, Oberteil, halbdurchlässiger Membran, Unterteil und Kugelventil, einen Flüssigkeits- und Gaskanal besitzt, der durch den mit dem Gasdurchtrittskörper verbundenen Membrankörper zum Gaskanal semipermeabel reduziert.
Der Vorteil des Be- und Entlüftungsautomaten 2 gegenüber dem der vorangegangenen Anmeldung ist, daß die aufwendige Anfertigung und Prüfung der aus Membranfolie und Träger bestehenden semipermeablen Membranpatrone entfällt.

Der Be- und Entlüftungsautomat mit Elastomermembran 3 - deutsche Patentanmeldung DE 10 2010 055 886 - besteht aus einem Deckel, einem Oberteil, einer Membran, einem Unterteil sowie einem Kugelventil. Die Kunststoffteile Deckel und Oberteil sind zweiteilig gespritzt, werden aber durch Fügen und Schweißen, Pressen und/ oder Kleben einstückig. Ober- und Unterteil werden miteinander über die im Oberteil im 2K (Komponenten)-Verfahren angespritzte Membran als Dichtteil verschraubt. Der Vorteil des Be- und Entlüftungsautomaten 3 gegenüber dem der vorangegangenen Anmeldung ist, daß die Führung des Flüssigkeits- und Gaskanals so gestaltet ist, daß die semipermeable Elastomermembran im 2K (Komponenten)-Kunststoff-Spritzverfahren im laufenden Produktionsprozeß eingebracht wird.

Vorgestellt wird ein weiterer Be- und Entlüftungsautomat mit Elastomermembran 4, gemäß Patentanmeldung DE 10 2011 109 164, der ebenfalls aus einem Deckel, einem Adapter, einer Membran, einem Unterteil sowie einem Kugelventil besteht und deren Funktion sich wie oben darstellt.
Der Adapter besitzt eine nach oben weisende Bohrung für die Membran-Dauerentlüftung. In einem zylinderförmigen Hohlraum zwischen Adapter und Doppelnippel befindet sich die einstückig mit dem Adapter verbundene, U-scheibenförmig ausgebildete semipermeable Membrandichtung. Sie führt mit der Links-/Rechts-Verschrau-bung von Deckel und Adapter eine Auf-/Ab-Bewegung aus und bildet somit ein Offen-/Zu-Ventil für die Schnellentlüftung und ggf. über den Ventilstößel für das Kugelventil. Ein weiterer Vorteil des Be- und Entlüftungsautomaten 4 gegenüber den vorangegangenen Veröffentlichungen ist neben der einstückigen Membranausführung mit Träger die Separierbarkeit und Eigenständigkeit des aufgebrachten Deckels; der Deckel überdeckt vollständig den Elastomermembran-Entlüfter und seine Ausführungsform und Gestaltung bestimmen das Erscheinungsbild des Automaten in Form- und Farbgebung.
Bei der Entlüftung wird ganz auf bekannte halbautomatische oder automatische Entlüfter mit Schwimmertechnologie verzichtet und die ohne mechanisch bewegliche Teile auskommende Membran-Technologie bevorzugt eingesetzt. Mit dem Verzicht auf die Schwimmertechnologie geht auch der Verzicht auf eine automatische Anlagen-Schnellentlüftung einher, die jedoch abschließender Bestandteil bei allen Installations-, Instandsetzungs- und Reparatur- und Wartungsarbeiten an wasserführenden Anlagen ist.
Alle vorgestellten Veröffentlichungen eignen sich nur bedingt oder gar nicht für den spezifischen Einsatz als Anschlußstück mit weiteren Funktionen für eine wassertechnische Einrichtung - insbesondere nicht als 3-Wege- oder T-Anschlußstück mit einem Elastomermembran-Entlüfter.
Der Erfindung liegt daher die Aufgabe zu Grunde, eine Einrichtung nach dem Oberbegriff des Anspruchs 1, ein Anschlußstück mit weiteren Funktionen für eine wassertechnische Einrichtung - insbesondere ein 3-Wege- oder T-Anschlußstück mit einem Elastomermembran-Entlüfter zu schaffen.

Diese Aufgabe wird erfindungsgemäß durch die Merkmale des Anspruchs 1 gelöst; auf vorteilhafte Ausgestaltungen nehmen die Unteransprüche Bezug.
Ein 3-Wege- oder T-Anschlußstück ist bekannt und wird u.a. zum Anschließen von Heizkörpern an Warmwasserkreisläufe oder mechanische und strömungstechnische Verbindung zwischen mindestens zwei Heizkörperplatten, wobei ein dritter Anschluß zur freien Verfügung steht, wie zum Anschluß eines thermischen Ventils, eines dichtenden Verschlußstopfens oder eines verschließbaren Entlüftungseinsatzes, zwecks Aufbau eines Ventils oder eines Verteilers. Das Anschlußstück besteht aus einem Mittelstück und drei, meist in der Ebene je im rechten Winkel versetzten Anschlußstutzen, wobei im Mittelstück entsprechende Kanäle vorgesehen sind, die durch Übergänge und Dichtflächen geschaffen sind, und gewünschte offene oder einstellbare Strömungsverbindungen bilden. Üblicherweise weist das Anschlußstück für jeden Anschlußstutzen im Mittelstück einen eigenen Kanal auf, so daß durch unterschiedliche Einsätze am mittleren Anschlußstutzen Einfluß auf die Strömungsverhältnisse zwischen den Kanälen der beiden außenliegenden Anschlußstutzen genommen werden kann.

Eine weitere Ausgestaltung der Erfindung sieht vor, daß das Anschlußstück in seinem Mittelstück einen als Dichtfläche ausgeprägten, flachzylinderförmigen Übergang aufweist und an dem der Ventilstößel eines Ventileinsatzes oder die Blindstopfen-Stirnseite eines Blindanschlusses dichtend anliegt. In einer weiteren Ausprägungsform ist der Blindstopfen als Entlüftungseinsatz ausgebildet, an dem ein Entlüftungsventil anschließbar ist, durch welches der Heizkörper zu entlüften ist. Umgekehrt kann der Flachzylinder-Übergang auch als Dichtelement ausgeprägt sein, je nach Werkstoffkomponenten auf der einen oder der anderen Seite der Dichtung. Eine weitere Ausführung sieht eine Dichtfläche als hohlzylinderförmigen Ansatz vor, wobei die Dichtung mittels eines Einsatzes über dessen ebenfalls als Hohlzylinder ausgeführten Außen- oder Innenwand korrespondierend erfolgt. Während bei der flachzylinderförmigen Dichtung es nur eine 'Auf'- oder 'Zu'-Stellung gibt, läßt die Hohlzylinder-Lösung je nach Höhe des Zylinders einen Verfahrweg und damit eine wegabhängige Dichtung oder Öffnung auch mit Mehrweg-Ventilcharakter zu.

Der Baukasten 'Anschlußstück mit Elastomer-Membranentlüfter 2' setzt auf einem bekannten 3-Wege- oder T-Anschlußstück mit einem Vorlauf- - Kanal A - und einem um 180°-versetzten Rücklauf-Anschlußstutzen - Kanal B - sowie einem weiteren, in der von den beiden obigen Stutzen aufgespannten Ebene und von diesen um je 90° versetzt gelagerten mittleren Anschlußstutzen mit einem zentralen Mittelstück mit getrennter Kanalführung auf, von dem aus die Stutzen ausgehen. Das 3-Wege- oder T-Anschlußstück ist Handelsware; das zentrale Mittelstück besitzt eine flach- oder eine innen- oder außenanschließbare hohlzylinderförmige Dichtfläche für den mittleren Funktionsanschluß.

Der Baukasten 'Anschlußstück mit Elastomer-Membranentlüfter 2' besteht - vom Anschlußstück aus gesehen - aus einer Baugruppe Ventileinsatz und einer Baugruppe Entlüftungsaufsatz, die folgende, im wesentlichen zylinderförmige Bauteile beinhalten
- Baugruppe Ventileinsatz
   -- 2-kanaliges Einsatzstück
   -- Kugelventil pro Kanal
   -- 2-kanaliger Grundkörper sowie
   -- Satz diverser Federn und Dichtungen
- Baugruppe Entlüftungsaufsatz
   -- Deckeleinsatz
   -- Semipermeable Membran
   -- Zwischenscheibe
   -- Deckel mit Zierdeckel sowie
   -- Satz diverser Federn und Dichtungen.

Das Anschlußstück ist - wie oben dargestellt - Teil einer Handelsware und ist in der Ausführung mit Mittelstück-Stirndichtung und in der Ausführung mit Mittelstück-Hohlzylinderdichtung am Markt erhältlich. Die Bauteile sind im wesentlichen - bis auf die Federelemente - aus Kunststoff gefertigt; die Dichtungen sind Elastomer-Teile. Die Kunststoff-Teile können auch als Dreh- oder Frästeile aus Metall - wie Messing oder Rotguß - hergestellt sein. Die Bauteile sind zu einer einsatzfähigen Baugruppe einstückig gefügt. Der Elastomermembran-Entlüfter - bestehend aus den Baugruppen Ventileinsatz und Entlüftungsaufsatz - wird in das zentrale Mittelstück des T-Anschlußstücks dicht verschraubt.

Eine weitere Ausprägung der Erfindung sieht vor, daß das 2-kanalige Kanal A-/Kanal B-Einsatzstück des Ventileinsatzes an seinem unteren Ende einen dichtenden Anschluß für einen Kanal des zentralen Mittelstücks des Anschlußstücks besitzt; der zu dichtende Anschluß des Mittelstücks ist mechanisch entweder
- als Flachzylinder ausgeführt und die stirnseitige Flachdichtung des Einsatzstücks dichtet gegen den Flachzylinder oder
- als hohlzylinderförmiger Stutzen ausgeführt und das Gegenstück des Einsatzstücks ist ebenfalls mit einem Rohransatz versehen und dichtet innen, außen oder stirnseitig am Stutzen.

Im zweiten Fall können auch mehrere Dichtringe als Normteile zum Einsatz kommen oder auch eine Dichtmanschette als Konstruktionsteil, die sowohl innen, stirnseitig und außen dichten kann. Da an dieser Stelle keine weiteren Anforderungen - wie z.B. eine Ventilfunktion, o.ä. - gestellt sind, ist die Flachzylinder-Variante die wirtschaftlichste Lösung. Jedoch ist es sinnvoll, den Anschluß universell auszuführen, da beide T-Stückvarianten am Markt geführt werden und eine Verwechselung ausgeschlossen werden kann.

Gemäß einer weiteren Ausgestaltung der Erfindung führt der zweite Zulauf des T-Anschlußstücks führt - von dem ersten getrennt - über einen seitlichen Einlaß in den zweiten Kanal des Einsatzstücks; gedichtet wird dieser Raum erst mittels eines Dichtrings des Grundkörpers durch eine Schraubverbindung zwischen dem zentralen Mittelstück des T-Anschlußstücks mit dem Elastomermembran-Entlüfter. Das 2-kanalige Einsatzstück ist mit dem Grundkörper des Elastomermem-bran-Entlüfters über eine mechanische trennbare Schnittstelle einstückig dicht verbunden; über zwei seitliche Quernuten des Einsatzstücks rasten zwei Federn des Grundkörpers in den Nuten des Einsatzstücks. Die beiden symmetrisch angeordneten, hohlzylinderförmigen Kanäle des Einsatzstücks weisen am oberen Ende je einen rohrförmigen Überstand auf, die je mit zwei Dichtringen belegt ihre hohlzylinderförmige, weiterhin getrennte Fortsetzung in dem Grundkörper finden.

Eine weitere vorteilhafte Ausgestaltung der Erfindung sieht vor, daß der Grundkörper des Ventileinsatzes - wie das Einsatzstück - im wesentlichen hohlzylinderförmiger Gestalt ist, mit dem Einsatzstück einstückig trennbar verrastet ist und sowohl an seinem unteren als auch an seinem oberen Ende je ein Außengewinde mit einer dazwischenliegenden, einen weiteren Dichtring tragenden Nut hat. Dieses untere Außengewinde korrespondiert mit dem Innengewinde des zentralen Mittelstücks des T-Anschlußstücks; eingeschraubt dichtet der Dichtring den Raum zwischen Einsatzstück und Mittelstück ab. Die oberen Gewindegänge bilden die lösbare Verbindung zu dem Innengewinde des Deckels. Die rohrförmige 2-kanalige Fortsetzung des Einsatzstücks in den Grundkörper ist ausgefüllt mit je einem spiralfedergelagertem Kugelventil, wobei die Ventilfedern sich einerseits auf den rohrförmigen Überständen des Einsatzstücks abstützen und andererseits gegen zwei, über je einen als Stößel ausgeprägten Stift des Deckeleinsatzes geführte Kugeln drücken. Diese beiden Kugelventile schließen die beiden bisher getrennt geführten Kanäle dann ab - um ein Auslaufen des Heizungsmediums zu verhindern - wenn der Entlüftungsaufsatz zu Wartungszwecken oder Reparaturarbeiten entfernt ist.

Eine weitere Ausprägungsform der erfinderischen Neuheit ist dadurch gegeben, daß Deckel, Zwischenscheibe, semipermeable Membran, Deckeleinsatz, Dichtung und Zierdeckel den zylinderförmigen Entlüftungsaufsatz nach Art des oben beschriebenen Be- und Entlüftungsautomaten mit semipermeabler Elastomermembran bilden. In eine Zentralbohrung des Deckels wird eine Zwischenscheibe über an der Scheibe angespritzte Rasthaken lösbar eingerastet; die Zwischenscheibe weist um das Zentrum Durchgangsbohrungen für die Entlüftung und in den Randzonen radiale Langlöcher zur Aufnahme von korrespondierenden Rasthaken des Deckeleinsatzes auf. Deckel, Zwischenscheibe und Deckeleinsatz sind im wesentlichen zylinderförmige Körper; je halbseitige axiale Aussparungen zwischen den Langlöchern auf der Unterseite der Zwischenscheibe und zwischen den Rasthaken auf der Oberseite des Deckeleinsatzes schaffen einen scheibenförmigen Zwischenraum zwecks Aufnahme der elastomergespritzten semipermeablen Membran als Einlegeteil. Ein im Mehr-K-Spritzverfahren hergestellte Kombination aus Zwischenscheibe und Membran oder Deckeleinsatz und Membran oder einen alle drei Bauteile einschließende Membraneinsatz ist ebenfalls zu prüfen. Für die Funktionsfähigkeit einer automatisierten Entlüftung sind in Höhe der Membran des Deckeleinsatzes ebenfalls axiale Durchgangsbohrungen vorgesehen. Einerseits muß die Kombination aus Deckeleinsatz, Membran und Zwischenscheibe dem Anlagenprüfdruck über die Prüfzeit standhalten und andererseits ist die Kombination so zu bemessen, daß ausreichend Permeation zwischen der Anlage und dem Umfeld stattfindet. Zu diesem Zweck ist unbedingt sicherzustellen, daß die Entgasung der Anlage ausnahmslos über die Bohrungen von Deckeleinsatz und Zwischenscheibe und semipermeabler Membran stattfindet und der Entlüftungsaufsatz ansonsten eine sehr gute Dichtigkeit aufweist.

Eine weitere Ausgestaltung der Erfindung sieht vor, daß zur Komplettierung des Entlüftungsaufsatzes der Deckelaufsatz unterseitig in axialer Richtung eine etwa hohlzylinderförmige Dichtung übergestülpt bekommt; diese Dichtung definiert im verbauten Zustand des Deckeleinsatzes mit dem Grundkörper den Weg des Heizungsmediums über die axialen Durchgangsbohrungen des Deckeleinsatzes bis zur semipermeablen Membran und stellt die Dichtigkeit des Aufsatzes sicher. Außerdem nimmt die zylinderförmige Auflassung der in die Deckelbohrung gesteckten Rasthaken der Zwischenscheibe unter Spannung die hohlzylinderförmig ausgeprägte Klemmeinrichtung des Zierdeckels auf und sichert so die Zwischenscheibe gegen Entnahme oder Ausfall. Der Zierdeckel trägt zur Wertanmutung des Entlüftungsaufsatzes bei, deckt die Technik des Deckels ab und seine sichtbare Oberfläche eignet sich zur Anbringung werbetechnischer Aussagen, wie Eigennamen, Herstellerbezeichnung, Typangaben, Artikelnummern, o.ä.

Nach Montage des Ventileinsatzes - des Grundkörpers mit dem gerasteten Einsatz und den Kugelventilen - in dem zentralen Mittelstück des T-Anschlußstücks durch Verschrauben und Dichten, wozu der Gruhdkörper an seiner Oberseite über einen Vierkant-Schlüsselansatz zum Nachziehen verfügt, wird der vollständige Entlüftungsaufsatz über das Innengewinde an der Unterseite des Deckels mit dem dann aus dem zentralen Mittelstück herausragenden Teil des Grundkörpers mit seinem korrespondierenden Außengewinde verschraubt, wobei aus der Dreh- eine Längsbewegung erzeugt wird, wobei mit dem Deckel auch die Zwischenscheibe, die Membrane und der Deckeleinsatz verfahren werden und die bis dahin die Kanäle dichtenden Kugeln der beiden Kugelventile im Innenraum zwischen Grundkörper und Einsatz durch die auf die Kugeln drückenden als Stößel ausgebildete Stifte des Deckeleinsatzes die Kugelventile öffnen - oder durch Lösen des Deckels schließen.

Gemäß einer weiteren bevorzugten Ausprägung der Erfindung bleiben außer dem durch ein Loslager drehbar gelagerten Deckel die Bauteile des Ventileinsatzes Einsatz und Grundkörper sowie des Entlüftungsaufsatzes Deckeleinsatz, Membrane und Zwischenscheibe lagegerecht zueinander. Der Ventileinsatz bestehend aus Grundkörper und Einsatz ist fest sitzend und dicht mit dem zentralen Mittelstück des T-Anschlußstücks verschraubt. Der axial verschiebliche Deckeleinsatz besitzt zwei diametral angeordnete ovale Auskragungen, die in korrespondierenden Ausnehmungen des Grundkörpers geführt werden und eine Verdrehsicherheit gewährleisten. Die Zwischenscheibe weist in den Randzonen angeordnete radiale Langlöcher zur Aufnahme von korrespondierenden Rasthaken des Deckeleinsatzes auf, wobei diese Verbindung keine Drehbewegung toleriert, was auch auf die im Zwischenraum der beiden Bauteile eingebrachte semipermeable Membrane zutrifft.

Ist in einer weiteren bevorzugten Ausführung der erfinderischen Neuheit zwischen den beiden Platten eines Plattenheizkörpers ein T-Anschlußstück mit Elastomermembran-Entlüfter installiert, strömt das Heizungsmedium durch die beiden gegenüberliegenden Anschlußstutzen des T-Anschlußstücks in das zentrale Mittelstück, dort geleitet über die beiden Kanäle des Einsatzes in den Raum zwischen Einsatz und Grundkörper und zu den Kugelventilen, über die geöffneten Kugelventile durch die Bohrungen des Deckeleinsatzes zu der semipermeablen Membran zum Entgasen.

Eine vorteilhafte Variation in der Steuerung der Kugelventile von z.Zt. beide Ventile 'Auf' oder 'Zu' in das ein oder andere Ventil 'Auf' oder 'Zu' ergibt sich dadurch, daß der Deckeleinsatz mit einem weiteren als Stößel ausgeprägten Stift versehen wird, der in einer um 45° axial gedrehten Stellung des Deckeleinsatzes wirksam wird und auf die eine oder andere Kugel bei Verschrauben des Deckels wirkt. Mit einer Bedienung von außen wird die Festeinstellung umgangen und kann zu Prüfzwecken oder Wartungsarbeiten von Bedeutung sein. In diesem Fall muß dem Grundkörper an geeigneter Stelle eine oder zwei weitere 45°-versetzte Ausnehmungen hinzugefügt werden, wenn beide Kugelventile auch getrennt angesprochen werden sollen, so daß vier Betriebszustände möglich sind, wie
a) Vor- und Rücklauf geschlossen
b) Vorlauf geöffnet, Rücklauf geschlossen
c) Vorlauf geschlossen, Rücklauf geöffnet
d) Vor- und Rücklauf geöffnet.

Unter Pkt. b) wird der Vorlauf der wassertechnischen Anlage über Kanal A entlüftet, unter Pkt. c) wird der Rücklauf der Anlage über Kanal B entlüftet und unter Pkt. d) werden Vor- und Rücklauf der Anlage über Kanal A und Kanal B entlüftet. Die Pkte. b) - c) sind für die Entlüftung von seriell geschalteten Platten von Flachheizkörpern von Bedeutung, Pkt. d) ist für die Entlüftung von parallel arbeitenden Platten von Flachheizkörpern von Belang.

Der Gegenstand der Erfindung wird nachfolgend anhand der als Anlage beigefügten Zeichnungen von Ausführungsbeispielen weiter verdeutlicht. Es zeigen
- **Fig. 1**: Elastomermembran-Entlüfter, in Perspektive
**a)** Unteransicht
**b)** Draufsicht
- **Fig. 2**: Anschlußstück mit Elastomermembran-Entlüfter, Explosionsdarstellung
- **Fig. 3**: Elastomermembran-Entlüfter, Schnittdarstellung

Die folgenden Figuren zeigen in Perspektive und je in **a)** Unteransicht und **b)** Draufsicht
- **Fig. 4**: Einsatzstück
- **Fig. 5**: Grundkörper
- **Fig. 6**: Deckeleinsatz
- **Fig. 7**: Semipermeable Membran
- **Fig. 8**: Zwischenscheibe
- **Fig. 9**: Schraubdeckel.

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterung der Figuren.

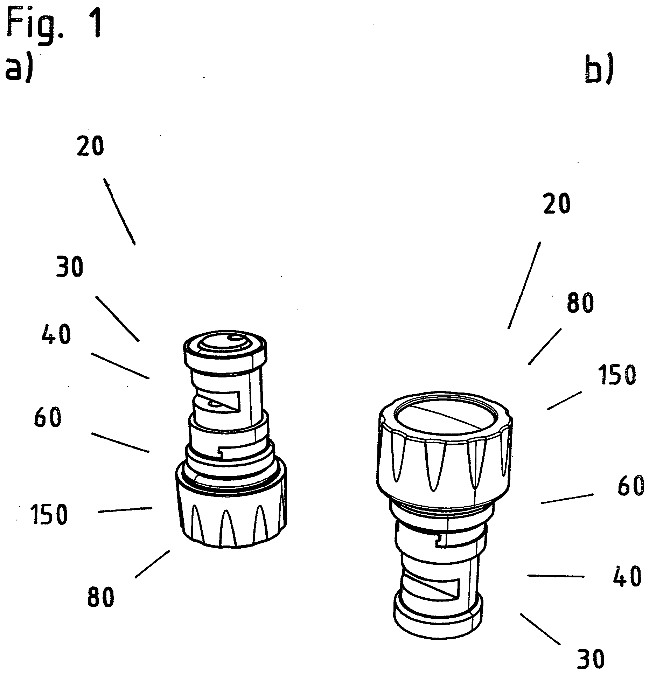

Wie aus **Fig. 1** ersichtlich, besteht der Baukasten 'Elastomer-Membranentlüfter 2' **20** - vom Anschlußstück **10** aus gesehen - aus einer Baugruppe Ventileinsatz **30** und einer Baugruppe Entlüftungsaufsatz **80**, die folgende, im wesentlichen zylinderförmige Bauteile **41, 61, 91, 111, 131, 151** beinhalten
- Baugruppe Ventileinsatz
   -- 2-kanaliges Einsatzstück **40**
   -- Kugelventil pro Kanal
   -- 2-kanaliger Grundkörper **60**
   - Satz diverser Federn und Dichtungen
- Baugruppe Entlüftungsaufsatz
   -- Deckeleinsatz **90**
   -- Semipermeable Membran **110**
   -- Zwischenscheibe **130**
   -- Deckel **150** mit Zierdeckel sowie
   -- Satz diverser Federn und Dichtungen.

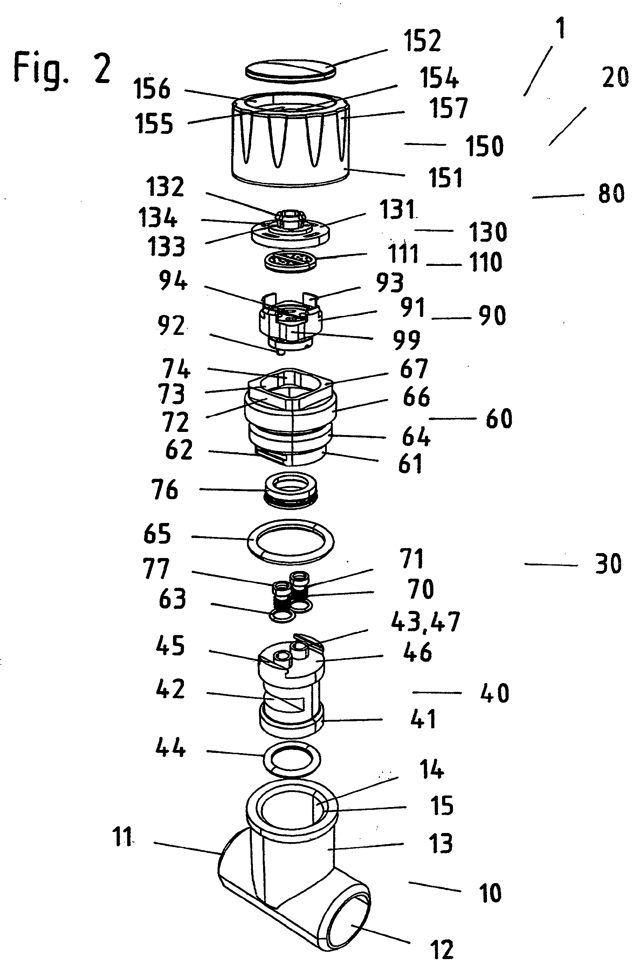

Gemäß **Fig. 2** - Anschlußstück mit Elastomermembran-Entlüfter in Explosionsdarstellung - setzt der Baukasten 'Anschlußstück mit Elastomermembran-Entlüfter 2' **1** auf einem bekannten 3-Wege- oder T-Anschlußstück **10** mit einem Vorlauf-Anschluß-stutzen **11** - Kanal A - und einem um 180°-versetzten Rücklauf-Anschlußstutzen **12** - Kanal B - sowie einem weiteren, in der von den beiden obigen Stutzen aufgespannten Ebene und von diesen um je 90° versetzt gelagerten mittleren Anschlußstutzen **13** mit einem zentralen Mittelstück **14** mit getrennter Kanalführung auf, von dem aus die Stutzen ausgehen. Das 3-Wege- oder T-Anschlußstück ist als Handelsware am Markt erhältlich; das zentrale Mittelstück besitzt eine flach- öder eine innen- oder außenanschließbare hohlzylinderförmige, mit der Dichtfläche des Einsatzstücks **40** korrespondierende Dichtfläche für den mittleren Funktionsanschluß.

Das Anschlußstück **10** ist - wie oben dargestellt - Teil einer Handelsware und ist in der Ausführung mit Mittelstück-Stirndichtung und in der Ausführung mit Mittelstück-Hohlzylinderdichtung am Markt erhältlich. Die Bauteile sind im wesentlichen - bis auf die Federelemente - aus Kunststoff gefertigt; die Dichtungen sind Elastomer-Teile. Die Kunststoff-Teile können auch als Dreh- oder Frästeile aus Metall - wie Messing oder Rotguß - hergestellt sein. Die Bauteile sind zu einer einsatzfähigen Baugruppe 'Elastomermembran-Entlüfter' **20** einstückig gefügt. Der Elastomermembran-Entlüfter - bestehend aus den Baugruppen Ventileinsatz **30** und Entlüftungsaufsatz **80** - wird in das zentrale Mittelstück **14** des T-Anschlußstücks dichtend verschraubt.

Das 2-kanalige Kanal A **42** /Kanal B **43** -Einsatzstück **40** des Ventileinsatzes **30** besitzt an seinem unteren Ende einen dichtenden Anschluß **43, 44, 48** für einen Kanal **12, 13** des zentralen Mittelstücks **14** des Anschlußstücks **10;** der zu dichtende Anschluß des Mittelstücks ist mechanisch entweder
- als Flachzylinder ausgeführt und eine stirnseitige Flachdichtung oder ein Dichtring des Einsatzstücks dichtet gegen den Flachzylinder oder
- als hohlzylinderförmiger Stutzen ausgeführt und das Gegenstück des Einsatzstücks ist ebenfalls mit einem Rohransatz versehen und dichtet innen, außen oder stirnseitig am Stutzen.

Der zweite Zulauf **11** des T-Anschlußstücks **10** führt - von dem ersten getrennt - über einen seitlichen Einlaß **42** in den zweiten Kanal des Einsatzstücks **40** des Ventileinsatzes **30**; gedichtet wird dieser Raum erst mittels eines Dichtrings 3 **76** in einer Nut **75** des Grundkörpers **60** durch eine Schraubverbindung **64** zwischen dem zentralen Mittelstück **14** des T-Anschlußstücks **10** mit dem Elastomermembran-Entlüfter **20** . Das 2-kanalige Einsatzstück ist mit dem Grundkörper des Elastomermembran-Entlüfters über eine mechanische trennbare Schnittstelle **45**, **46**, **62** einstückig dicht durch Dichtring 1 **63** verbunden; über zwei seitliche Quernuten 2 **46** des Einsatzstücks rasten zwei Federn des Grundkörpers **62** in den Nuten des Einsatzstücks. Die beiden symmetrisch angeordneten, hohlzylinderförmigen Kanäle A, B **42, 43** des Einsatzstücks weisen an ihrem oberen Ende je einen rohrförmigen Überstand **47** auf, die je mit zwei Dichtringen 1 **63** belegt ihre hohlzylinderförmige, weiterhin getrennt geführte Fortsetzung in dem Grundkörper finden.

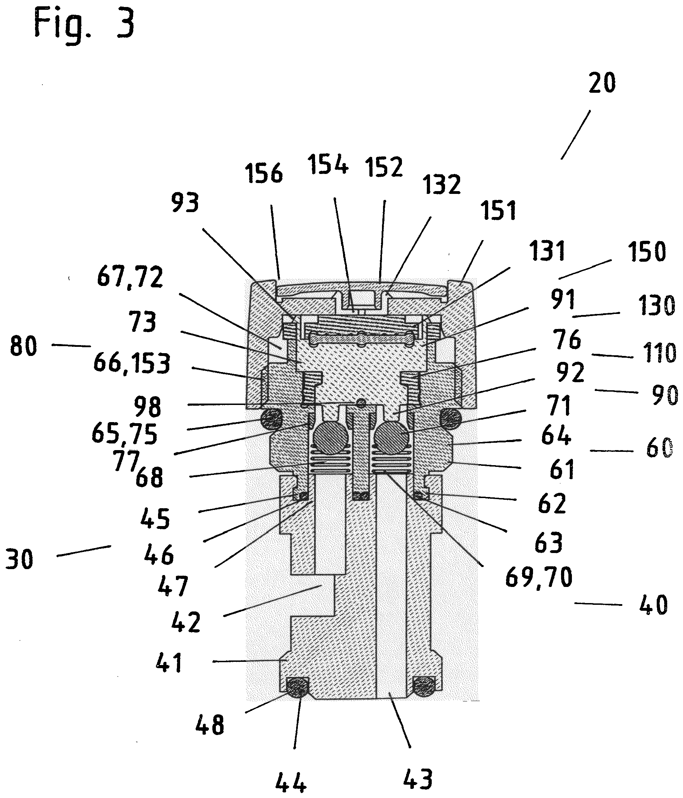

**Fig. 3** zeigt den Aufbau des Elastomermembran-Entlüfters **20** in einer Schnittdarstellung.

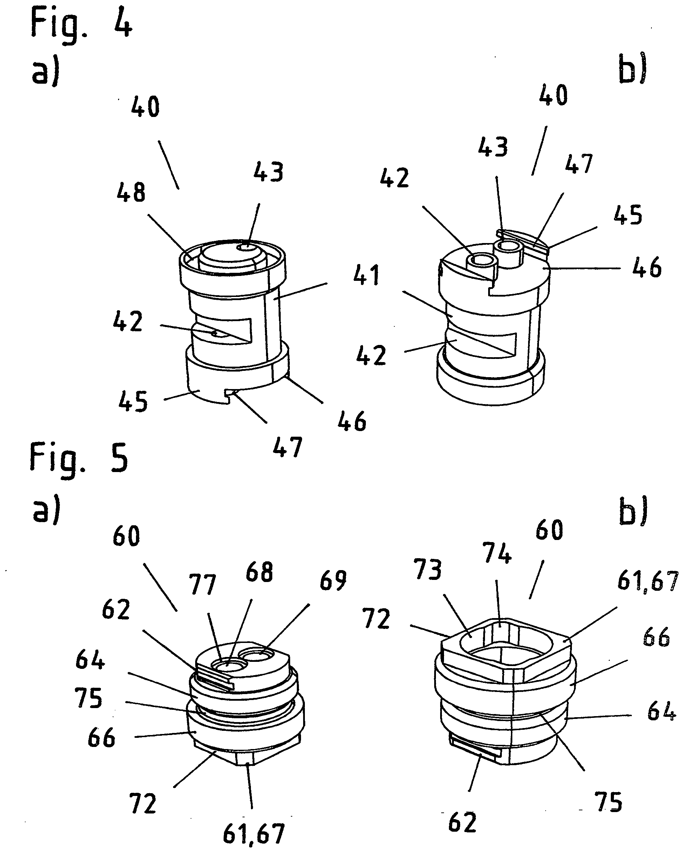

Der Grundkörper **60** des Ventileinsatzes **30** - **Fig. 5** - ist - wie das Einsatzstück **40** - **Fig. 4** - im wesentlichen hohlzylinderförmiger Gestalt **61** , ist mit dem Einsatzstück einstückig trennbar verrastet **45, 46, 62**, hat sowohl an seinem unteren als auch an seinem oberen Ende je ein Außengewinde 1, 2 **64**, **66** mit einer dazwischenliegenden, einen weiteren Dichtring 2 **65** tragenden Nut **75**. Dieses untere Außengewinde **1 64** korrespondiert mit dem Innengewinde **15** des zentralen Mittelstücks **14** des T-Anschlußstücks **10** ; eingeschraubt dichtet der Dichtring 2 **65** den innenliegenden Raum zwischen Einsatzstück und Mittelstück ab. Die oberen Gewindegänge **66** bilden die lösbare Verbindung zu dem Innengewinde **153** des Deckels **150**. Die rohrförmige 2-kanalige Fortsetzung des Einsatzstücks **47** in den Grundkörper ist ausgefüllt mit je einem spiralfedergelagertem Kugelventil **70**, **71**, wobei die Ventilfedern **70** sich einerseits auf den rohrförmigen Überständen **47** des Einsatzstücks abstützen und andererseits gegen zwei, über je einen als Stößel **92** ausgeprägten Stift des Deckeleinsatzes **90** geführte Ventilkugeln **71** drücken. Diese beiden Kugelventile schließen die beiden bisher getrennt geführten Kanäle **68** , **69** dann ab - um ein Auslaufen des Heizungsmediums zu verhindern - wenn der Entlüftungsaufsatz **80** zu Wartungszwecken oder Reparaturarbeiten entfernt ist.

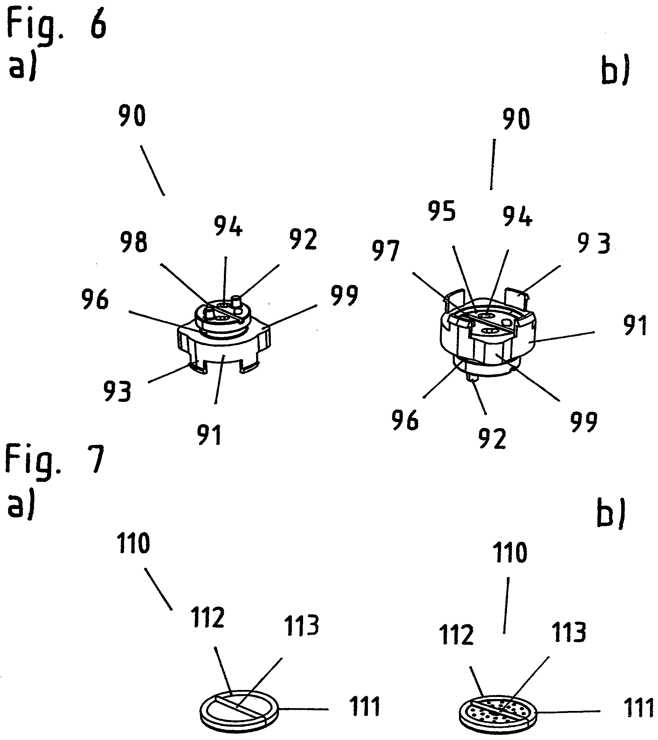

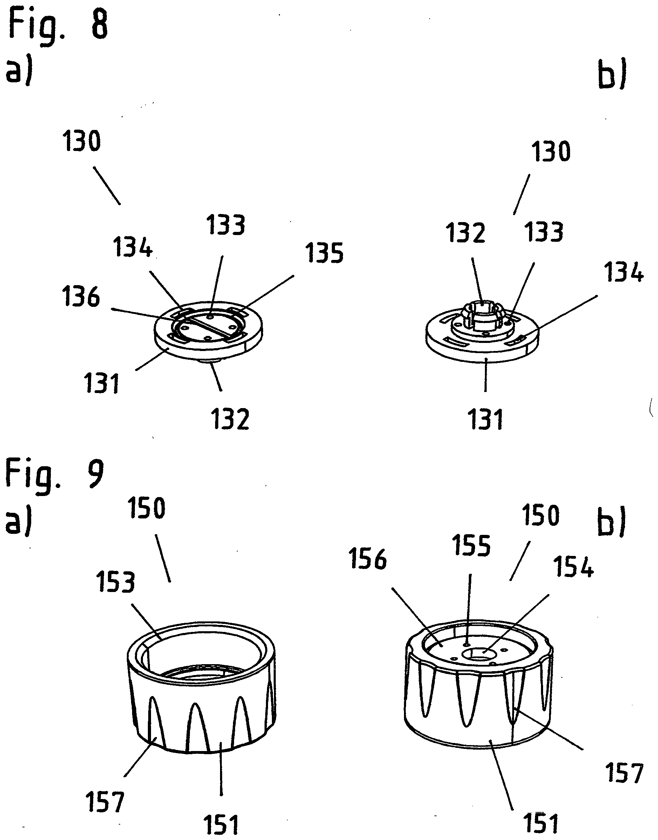

Deckel **150** - **Fig. 9** - mit Zierdeckel **152,** Zwischenscheibe **130 -** **Fig. 8** -, semipermeable Membran **110** - **Fig. 7** -, Deckeleinsatz **90** - **Fig. 6** - und Dichtung 3 **76** bilden den zylinderförmigen Entlüftungsaufsatz **80** nach Art des oben beschriebenen Be- und Entlüftungsautomaten mit semipermeabler Elastomermembran. In eine Zentralbohrung **154** des Deckels wird eine Zwischenscheibe **130** über an der Scheibe angespritzte Rasthaken **132** lösbar eingerastet; die Zwischenscheibe weist um das Zentrum Durchgangsbohrungen für die Entlüftung **133** und in den Randzonen radiale Langlöcher **134** zur Aufnahme von korrespondierenden Rasthaken **93** des Deckeleinsatzes **90** auf. Deckel, Zwischenscheibe und Deckeleinsatz sind im wesentlichen zylinderförmige Körper **91**, **131**, **151**; je halbseitige axiale Aussparungen **95**, **135** zwischen den Langlöchern **134** auf der Unterseite der Zwischenscheibe und zwischen den Rasthaken **93** auf der Oberseite des Deckeleinsatzes **90** schaffen einen scheibenförmigen Zwischenraum zwecks Aufnahme der elasto-mergespritzten semipermeablen Membran **110** als Einlegeteil **111** . Für die Funktionsfähigkeit einer automatisierten Entlüftung sind in Höhe der Membran des Dekkeleinsatzes ebenfalls axiale Durchgangsbohrungen **94** als Kanal A, B vorgesehen. Um sicherzustellen, daß die Entgasung des Heizungsmediums ausnahmslos über die Bohrungen von Deckeleinsatz und Zwischenscheibe und semipermeabler Mem-bran stattfindet, muß der Entlüftungsaufsatz **80** ansonsten eine sehr gute Dichtigkeit aufweisen; dies wird gefördert durch die Rand- **112** und Querverstärkung **113** der Membran bzw. unter Berücksichtigung bei den Aussparungen **95, 135.**

An der mechanischen Schnittstelle zwischen Ventileinsatz **30** und Entlüftungsaufsatz **80** , zwischen Grundkörper **60** und Deckeleinsatz **90**, unterseitig, wird in axialer Richtung eine etwa hohlzylinderförmige Dichtung 3 **76** eingepaßt; diese Dichtung definiert im verbauten Zustand des Deckeleinsatzes mit dem Grundkörper den Weg des Heizungsmediums über die axialen Durchgangsbohrungen **94** des Deckeleinsatzes bis zur semipermeablen Membran **110** und stellt die Dichtigkeit des Entlüfters **20** sicher. Außerdem nimmt die zylinderförmige Auflassung der in die Deckelbohrung **154** gesteckten Rasthaken **132** der Zwischenscheibe **130** unter Spannung die hohlzylinderförmig ausgeprägte Klemmeinrichtung des Zierdeckels **152** auf.

Nach Montage des Ventileinsatzes **30** - des Grundkörpers **60** mit dem gerasteten Einsatz **40** und den Kugelventilen - in dem zentralen Mittelstück **14** des T-Anschlußstücks **10** durch Verschrauben und Dichten, wozu der Grundkörper an seiner Oberseite über einen Vierkant-Schlüsselansatz **72** zum Nachziehen verfügt, wird der vollständige Entlüftungsaufsatz **80** über das Innengewinde **153** an der unteren Innenseite des Deckels **150** mit dem dann aus dem zentralen Mittelstück herausragenden Teil des Grundkörpers mit seinem korrespondierenden Außengewinde 2 **66** verschraubt, wobei aus der Dreh- eine Längsbewegung erzeugt wird und mit dem Deckel auch die Zwischenscheibe **130** , die Membrane **110** und der Deckeleinsatz **90** verfahren werden und die bis dahin die Kanäle **68, 69** dichtenden Kugeln der beiden Kugelventile **70**, **71** im Innenraum zwischen Grundkörper und Einsatz durch die auf die Kugeln drückenden als Stößel **92** ausgebildete Stifte des Deckeleinsatzes die Kugelventile öffnen - oder durch Lösen des Deckels schließen.

Außer dem durch ein Loslager **154** drehbar gelagerten Deckel **150** bleiben die Bauteile des Ventileinsatzes **30** - Einsatzstück **40** und Grundkörper **60** - sowie des Entlüftungsaufsatzes **80** - Deckeleinsatz **90**, Membrane **110** und Zwischenscheibe **130** - lagegerecht zueinander. Der Ventileinsatz bestehend aus Grundkörper und Einsatzstück ist fest sitzend und dicht mit dem zentralen Mittelstück des T-Anschlußstücks verschraubt. Der axial verschiebliche Deckeleinsatz besitzt zwei diametral angeordnete ovale Auskragungen **99,** die in korrespondierenden Ausnehmungen 74 des Grundkörpers geführt werden und eine Verdrehsicherheit gewährleisten. Die Zwischenscheibe weist in den Randzonen angeordnete radiale Langlöcher 134 zur Aufnahme von korrespondierenden Rasthaken 93 des Deckeleinsatzes auf, wobei diese Verbindung keine Drehbewegung toleriert, was auch auf die im Zwischenraum der beiden Bauteile **95,** 135 eingebrachte semipermeable Membrane zutrifft - Nuten **97**, **136** je halben Durchmessers nehmen die Querverstärkung **113** der Membrane lagegerecht und verdrehsicher auf.

Ist ein T-Anschlußstück mit Elastomermembran-Entlüfter **1** zwischen den beiden Platten eines Heizkörpers installiert, strömt das Heizungsmedium durch die beiden gegenüberliegenden Vor-/Rücklauf-Anschlußstutzen **11**, **12** des T-Anschlußstücks 10 in das zentrale Mittelstück **13**, **14**, dort geleitet über die beiden Kanäle A, B **42** , **43** des Einsatzes **40** und die Kanäle A, B **68**, **69** des Grundkörpers **60** zu den Kugelventilen **70**, **71**, über die durch die Stößel **92** des Deckeleinsatzes **90** geöffneten Kugelventile durch die Bohrungen **94** des Deckeleinsatzes zu der semipermeablen Membran **110** zum Entgasen über den Gaskanal **133, 155.**

Vorteilhafte Weiterentwicklungen der Erfindung sind Gegenstand der Unteransprüche; die zahlreichen Möglichkeiten und Vorteile der Ausgestaltung der Erfindung spiegeln sich in der Anzahl der Schutzansprüche wider.

### Bezugszeichenliste

- 1: 3-Wege- oder T-Anschlußstück mit 2-kanaligem Elastomermembran-Entlüfter

- 10: 3-Wege- oder T-Anschlußstück
- 11: Vorlaufstutzen
- 12: Rücklaufstutzen
- 13: Mittlerer Anschlußstutzen
- 14: Zentrales Mittelstück
- 15: Innengewinde

- 20: Elastomermembran-Entlüfter

- 30: Ventileinsatz

- 40: Einsatzstück
- 41: Körper
- 42: Einlaß Kanal A
- 43: Einlaß Kanal B
- 44: Dichtring
- 45: Rasthaken
- 46: Nut 2
- 47: Führung
- 48: Nut 1

- 60: Grundkörper
- 61: Körper
- 62: Federhaken
- 63: Dichtring 1
- 64: Außengewinde 1
- 65: Dichtring 2
- 66: Außengewinde 2
- 67: Aufnahme
- 68: Kanal A
- 69: Kanal B
- 70: Spiralfeder
- 71: Kugel
- 72: Schlüsselansatz
- 73: Bohrung
- 74: Ausnehmung
- 75: Nut
- 76: Dichtring 3
- 77: Dichtring 4
- 80: Entlüftungsaufsatz

- 90: Deckeleinsatz
- 91: Körper
- 92: Stößel
- 93: Rasthaken
- 94: Kanal A, B
- 95: Aussparung
- 96: Nut 1
- 97: Nut 2
- 98: Nut 3
- 99: Auskragung

- 110: Semipermeable Membran
- 111: Körper
- 112: Randverstärkung
- 113: Querverstärkung

- 130: Zwischenscheibe
- 131: Körper
- 132: Rasthaken
- 133: Durchgangsbohrung, Gaskanal
- 134: Langloch
- 135: Aussparung
- 136: Nut

- 150: Schraubdeckel mit Zierdeckel
- 151: Körper
- 152: Zierdeckel
- 153: Innengewinde
- 154: Loslager
- 155: Durchgangsbohrung, Gaskanal
- 156: Aufnahme
- 157: Griffmulden

## Patentansprüche

1. 3-Wege- oder T-Anschlußstück mit weiteren Funktionen für eine wassertechnische Einrichtung, wobei das 3-Wege oder T-Anschlußstück einen Elastomermembran-Entlüfter (1, 20) aufweist, wobei das 3-Wege oder T-Anschlußstück drei, in einer Ebene liegende, je um 90° versetzte, von einem zentralen Mittelstück (14) ausgehende Anschlußstutzen aufweist, nämlich einem Vorlaufstutzen (11), einem dem gegenüberliegenden Rücklaufstutzen (12) und einem mittleren Anschlußstutzen (13), wobei das zentrale Mittelstück (14) Mittel aufweist, die Vor- und Rücklaufmedien in dem mittleren Anschlußstutzen (13) getrennt zu führen, wobei der Elastomermembran-Entlüfter (20) besteht aus
- einer Baugruppe Ventileinsatz (30) mit
-- einem 2-kanaligen Einsatzstück (40)
-- einem Kugelventil (70, 71) pro Kanal (68, 69) und
-- einem 2-kanaligen Grundkörper (60) und
- einer Baugruppe Entlüftungsaufsatz (80) mit
-- einem Deckeleinsatz (90)
-- einer semipermeablen Membran (110)
-- einer Zwischenscheibe (130) und
-- einem Schraubdeckel (150) mit Zierdeckel (152),
wobei die Baugruppen Ventileinsatz (30) und Entlüftungsaufsatz (80) zu dem Elastomermembran-Entlüfter (20) gedichtet montiert sind und der Elastomermembran-Entlüfter (20) in dem zentralen Mittelstück (14) mit den Mitteln dicht verbunden ist, die Vor- und Rücklaufmedien - bei geöffneten Kugelventilen (70, 71), auch unter Prüfdruck - bis zur Membrane (110) getrennt führt und mittels der Membrane (110) über Gaskanäle (133, 155) in der Zwischenscheibe (130) und dem Schraubdeckel (150) entgast.

2. Anschlußstück mit einem Elastomermembran-Entlüfter (1) nach Anspruch 1, **dadurch gekennzeichnet, daß**
der Elastomermembran-Entlüfter (20) aus dem Ventileinsatz (30) und dem Entlüftungsaufsatz (80) dicht verbaut ist, im zentralen Mittelstück (14) des Anschlußstücks (10) eingesetzt ist, über das Einsatzstück (40) eine bodenseitige (44), mit dem Rücklauf verbundene und über den Grundkörper (60) eine am Innenkragen (15) des mittleren Anschlußstutzens (13) mit dem Vorlauf verbundene Dichtstelle (65) aufweist.

3. Anschlußstück mit einem Elastomermembran-Entlüfter (1) nach mindestens einem der Ansprüche 1 und 2, **dadurch gekennzeichnet, daß**
das Einsatzstück (40) an seinem oberen, dem zentralen Mittelstück (14) abgewendeten Ende
eine mechanische und hydraulische, einstückig mittels einer Rastverbindung (45, 62) trenn- und lösbar verbundene, dichtringgedichtete (63) Schnittstelle zu einem dem zentralen Mittelstück (14) zugewendeten Ende des Grundkörpers (60) aufweist.

4. Anschlußstück mit einem Elastomermembran-Entlüfter (1) nach mindestens einem der Ansprüche 1 bis 3, **dadurch gekennzeichnet, daß**
die Kugelventile je Kanal (42, 68 und 43, 69) in axialer Richtung in der hydraulischen Schnittstelle von Einsatzstück (40) und Grundkörper (60) liegen,
Spiralfedern (70) der Kugelventile durch die Führungen (47) des Einsatzstücks (40) gestützt werden,
die Kugeln (71) der Kugelventile gegen einstückig mit dem Grundkörper (60) verbundene Dichtringe (77) dichten und die Spiralfedern (70) mechanisch, in axialer und in einer dem zentralen Mittelstück (14) abgewendeten Richtung auf die Kugeln (71) wirken.

5. Anschlußstück mit einem Elastomermembran-Entlüfter (1) nach mindestens einem der Ansprüche 1 bis 4, **dadurch gekennzeichnet, daß**
der Deckeleinsatz (90) des Entlüftungsaufsatzes (80) an seinem dem zentralen Mittelstück (14) zugewendeten Ende zwei in die Kanäle (68, 69) ragende Stößel (92) aufweist,
die in axialer Richtung auf die Kugeln (71) der Kugelventile so wirken, daß bei einer in Richtung des zentralen Mittelstücks (14) aus einer Drehbewegung des Schraubdeckels (15) umgewandelten Axialbewegung des Deckeleinsatzes (90) die Stößel (92) die Kugelventile öffnen und
eine umgekehrte Deckel-Drehbewegung die Stößel (92) die Ventile schließen.

6. Anschlußstück mit einem Elastomermembran-Entlüfter (1) nach mindestens einem der Ansprüche 1 bis 5, **dadurch gekennzeichnet, daß**
der Deckeleinsatz (90) des Entlüftungsaufsatzes (80) in seinem Zentrum die beiden Kanäle (68, 69) mittels Bohrungen (94) fortsetzt, an seinem dem zentralen Mittelstück (14) abgewendeten Ende in der radialen Randzone axial gerichtete Rasthaken (93) aufweist,
die in korrespondierender Lage befindliche radiale Langlöcher (134) der Zwischenscheibe (130) gerastet,
eine dauerhaft feste lösbare Verbindung zwischen den Bauteilen bildet.

7. Anschlußstück mit einem Elastomermembran-Entlüfter (1) nach mindestens einem der Ansprüche 1 bis 6, **dadurch gekennzeichnet, daß**
der Deckeleinsatz (90) des Entlüftungsaufsatzes (80) an seinem dem zentralen Mittelstück (14) abgewendeten Ende und
die Zwischenscheibe (130) desselben an ihrem dem zentralen Mittelstück (14) zugewendeten Ende je eine scheibenförmige axial gerichtete korrespondierende Aussparung (95, 135) aufweisen,
die zusammen zur dichten Aufnahme der semipermeablen Membran (110) befähigt sind, wobei
die Oberflächen der Aussparungen je ein Abbild der Membranoberfläche darstellen.

8. Anschlußstück mit einem Elastomermembran-Entlüfter (1) nach mindestens einem der Ansprüche 1 bis 7, **dadurch gekennzeichnet, daß**
die Zwischenscheibe (130) des Entlüftungsaufsatzes (80) um ihr Zentrum Entlüftungsbohrungen als Gaskanal (133) aufweist und
an ihrem dem zentralen Mittelstück (14) abgewendeten Ende einen in axiale Richtung weisenden, radial ausgedehnten Rasthaken (132) besitzt,
der in mechanischer Verbindung mit dem Schraubdeckel (150) ein Loslager (154) bildet.

9. Anschlußstück mit einem Elastomermembran-Entlüfter (1) nach Anspruch 8, **dadurch gekennzeichnet, daß** der über das Loslager (154) drehbar gelagerte Schraubdeckel (150) des Entlüftungsaufsatzes (80) bei Drehbewegung über sein Innengewinde (153) gegen das Außengewinde 2 (66) des festsitzenden Grundkörpers (60) eine Axialbewegung der Baugruppe aus Zwischenscheibe (130), semipermeabler Membran (110) und Deckeleinsatz (90) erzeugt, deren Wirkung sich über die Stößel (92) des Deckeleinsatzes an den Kugelventilen (70, 71) des Grundkörpers (60) entfaltet, wobei die Zwischenscheibe (130) mit dem Deckeleinsatz (90) nicht drehbar verrastet ist und der Deckeleinsatz über seine Auskragung (99) in der Ausnehmung (74) des Grundkörpers (60) axial verschieblich gelagert ist.

10. Anschlußstück mit einem Elastomermembran-Entlüfter (1) nach mindestens einem der Ansprüche 1 bis 9, **dadurch gekennzeichnet, daß**
das dem zentralen Mittelstück (14) zugewendete Ende des Einsatzstücks (40) des Ventileinsatzes (30) des Elastomermembran-Entlüfters (20) als mechanische und dichtungsmäßige Schnittstelle zum zentralen Mittelstück (14) des 3-Wege- oder T-Anschlußstücks (10) sowohl als eine 2-kanalige Stirn-Flachdichtung als auch eine 2-kanalige Hohlzylinderdichtung durch mehrere axial und radial angeordnete Dichtringe als Handelsware oder eine innen, stirnseitig und außen dichtende Dichtmanschette als Konstruktions-Spritzteil ausgeprägt ist.

## Claims

1. 3-way or T-fitting with additional functions for a water engineering device, wherein the 3-way or T-fitting has an elastomer membrane bleeder (1, 20), wherein the 3-way or T-fitting has three connection pieces that lie on one plane, are each offset by 90°, and proceed from a central middle piece (14), specifically a forward run connection piece (11), a backward run connection piece (12) lying opposite it, and a middle connection piece (13), wherein the central middle piece (14) has means for separately guiding the forward and backward run media in the middle connection piece (13), wherein the elastomer membrane bleeder (20) consists of
- a valve insert (30) assembly with
- a 2-channel insert (40),
- one ball valve (70, 71) per channel (68, 69), and
- a 2-channel base body (60) and
- a bleeder attachment (80) assembly with
- a cover insert (90),
- a semipermeable membrane (110),
- an intermediate plate (130) and
- a screw cap (150) with wheel disc (152), wherein
the valve insert (30) and bleeder attachment (80) assemblies are tightly mounted to the elastomer membrane bleeder (20), and the elastomer membrane bleeder (20) is tightly connected with the means in the central middle piece (14), separately guides the forward and backward run media up to the membrane (110) with the ball valves (70, 71) open, even under a test pressure, and degasses them by means of the membrane (110) via gas channels (133, 155) in the intermediate plate (13) and the screw cap (150).

2. The fitting with an elastomer membrane bleeder (1) according to claim 1, **characterized in that** the elastomer membrane bleeder (20) is tightly assembled out of the valve insert (30) and bleeder attachment (80), inserted in the central middle piece (14) of the fitting (10), and has a sealing point (65) on the floor side connected with the return run via the insert piece and on the inner collar (15) of the middle connection piece (13) connected with the forward run via the base body (60).

3. The fitting with an elastomer membrane bleeder (1) according to at least one of claims 1 and 2, **characterized in that** the upper end of the insert (40) facing away from the central middle piece (14) has a gasket-sealed (63) mechanical and hydraulic interface detachably and removably connected as one piece by means of a latching connection (45, 62) to an end of the base body (60) facing the central middle piece (14).

4. The fitting with an elastomer membrane bleeder (1) according to at least one of claims 1 to 3, **characterized in that** the ball valves per channel (42, 68 and 43, 69) lie in the hydraulic interface of the insert (40) and base body (60) in the axial direction, spiral springs (70) of the ball valves are supported by the guides (47) of the insert (40), the balls (71) of the ball valves seal against sealing rings (77) integrally connected with the base body (60), and the spiral springs (70) act mechanically on the balls (71) in an axial direction and in a direction away from the central middle piece (14).

5. The fitting with an elastomer membrane bleeder (1) according to at least one of claims 1 to 4, **characterized in that** the end of the cover insert (90) of the bleeder attachment (80) facing the central middle piece (14) has two plungers (92) extending into the channels (68, 69), which act in an axial direction on the balls (71) of the ball valves in such a way that the plungers (92) open the ball valves given an axial movement of the cover insert (90) converted from a rotational movement of the screw cap (15) in the direction of the central middle piece (14), and the plungers (92) close the valves given a reversed cover rotational movement.

6. The fitting with an elastomer membrane bleeder (1) according to at least one of claims 1 to 5, **characterized in that** the cover insert (90) of the bleeder attachment (80) continues the two channels (68, 69) in its center by means of boreholes (94), at its end facing away from the central middle piece (14) has axially directed latching hooks (93) in the radial edge zone, which latched into radial oblong holes (134) of the intermediate plate (130) located in a corresponding position form a permanently fixed detachable connection between the components.

7. The fitting with an elastomer membrane bleeder (1) according to at least one of claims 1 to 6, **characterized in that** the end of the cover insert (90) of the bleeder attachment (80) facing away from the central middle piece (14) and the end of the intermediate plate (13) of the latter facing the central middle piece (14) each have a disk-shaped, axially directed corresponding recess (95, 135), which together are able to tightly accommodate the semipermeable membrane (110), wherein the surfaces of the recesses each represent an image of the membrane surface.

8. The fitting with an elastomer membrane bleeder (1) according to at least one of claims 1 to 7, **characterized in that** the intermediate plate (130) of the bleeder attachment (80) has bleeding boreholes as the gas channel (133) around its center, and its end facing away from the central middle piece (14) has a radially extending latching hook (132) facing in the axial direction, which is mechanically connected with the screw cap (150) to form a floating bearing (154).

9. The fitting with an elastomer membrane bleeder (1) according to claim 8, **characterized in that** the screw cap (150) of the bleeder attachment (80) rotatably mounted over the floating bearing (154), during a rotational movement via its female thread (153) against the male thread 2 (66) of the fixed base body (60), generates an axial movement of the assembly comprised of the intermediate plate (13), semipermeable membrane (110) and cover insert (90), the effect of which is exerted via the plungers (92) of the cover insert on the ball valves (70, 71) of the base body (60), wherein the intermediate plate (130) with the cover insert (90) is non-rotatably latched, and the cover insert is mounted in an axially displaceable manner over its cantilever (99) in the recess (74) of the base body (60) .

10. The fitting with an elastomer membrane bleeder (1) according to at least one of claims 1 to 9, **characterized in that** the end of the insert (40) of the valve insert (30) of the elastomer membrane bleeder (20) facing the central middle piece (14) as a mechanical and sealing interface to the central middle piece (14) of the 3-way or T-fitting (10) and also as a 2-channel frontal flat gasket as well as a 2-channel hollow cylindrical seal is shaped by several axially and radially arranged sealing rings as merchandise or an inward, frontal and outward sealing collar as an injection molded structural component.

## Revendications

1. Pièce de raccord à 3 voies ou en T avec d'autres fonctions pour un dispositif relevant de la technique de l'eau, la pièce de raccord à 3 voies ou en T comportant un purgeur à membrane en élastomère (1,20), la pièce de raccord à 3 voies ou en T comportant trois tubulures de raccord situées dans un plan, décalées chacune de 90° sortant d'une pièce médiane centrale (14), notamment une tubulure d'arrivée (11), une tubulure de retour opposée (12) et une tubulure de raccord centrale (13), la pièce médiane centrale (14) comportant des moyens pour guider séparément les milieux d'arrivée et de retour dans les tubulures de raccord centrales (13), le purgeur à membrane en élastomère (20) étant composé
- d'un ensemble embout de clapet (30) avec
- une pièce d'insertion à 2 conduits (40)
- un clapet à bille (70,71) par conduit (68,69), et
- un corps de base (60) à 2 conduits, et
- un ensemble chapeau de purge (80) avec
- une garniture de couvercle (90),
- une membrane semi-perméable (110),
- une rondelle entretoise (130) et
- un couvercle à vis (150) avec un couvercle décoratif (152),
les ensembles embout de clapet (30) et chapeau de purge (80) étant montés de façon hermétique au purgeur à membrane en élastomère (20) et le purgeur à membrane en élastomère (20) dans la pièce médiane centrale (14) étant relié hermétiquement aux moyens, guidant séparément les milieux d'arrivée et de retour jusqu'à la membrane (110) lorsque les clapets à bille (70,71) sont ouverts, même sous pression d'essai et dégazant au moyen de la membrane (110) par le biais des conduits de gaz (133,155) dans la rondelle entretoise (130) et le couvercle à vis (150).

2. Pièce de raccord avec un purgeur à membrane en élastomère (1) selon la revendication 1, **caractérisée en ce que** le purgeur à membrane en élastomère (20) est construit de façon étanche composé de l'embout de clapet (30) et du chapeau de purge (80), est inséré dans la pièce médiane centrale (14) de la pièce de raccord (10), comporte à travers la pièce d'insertion (40), un point d'étanchéité (65) du côté du fond (44) relié au retour et à travers le corps de base (60), relié à l'arrivée sur le col intérieur (15) de la tubulure de raccord centrale (13).

3. Pièce de raccord avec un purgeur à membrane en élastomère (1) selon au moins l'une quelconque des revendications 1 et 2, **caractérisée en ce que** la pièce d'insertion (40) comporte à son extrémité supérieure, opposée à la pièce médiane centrale (14) une interface étanchéifiée par bague d'étanchéité (63), mécanique et hydraulique, reliée en une seule pièce séparable et démontable au moyen d'un raccord à crans (45,62) par rapport à une extrémité du corps de base (60) tournée vers la pièce médiane centrale (14).

4. Pièce de raccord avec un purgeur à membrane en élastomère (1) selon au moins l'une quelconque des revendications 1 à 3, **caractérisée en ce que** les clapets à bille se situent pour chaque conduit (42,68 et 43,69) en direction axiale dans l'interface hydraulique de la pièce d'insertion (40) et du corps de base (60),
les ressorts en spirale (70) des clapets à bille sont soutenus par les guidages (47) de la pièce d'insertion (40),
les billes (71) des clapets à bille étanchéifient par rapport aux bagues d'étanchéité (77) reliées en une seule pièce au corps de base (60) et
les ressorts en spirale (70) agissent mécaniquement sur les billes (71) en direction axiale et dans une direction opposée à la pièce médiane centrale (14).

5. Pièce de raccord avec un purgeur à membrane en élastomère (1) selon au moins l'une quelconque des revendications 1 à 4, **caractérisé en ce que** la garniture de couvercle (90) du chapeau de purgeur (80) comporte à son extrémité tournée vers la pièce médiane centrale (14), deux poussoirs (92) se dressant dans les conduits (68, 69)
qui agissent en direction axiale sur les boisseaux (71) des clapets à bille de telle sorte que lors d'un mouvement axial de la garniture de couvercle (90) en direction de la pièce médiane centrale (14) transformé à partir d'un mouvement de rotation du couvercle à vis (15), les poussoirs (92) ouvrent les clapets à bille et les poussoirs (92) ferment les clapets par un mouvement de rotation de couvercle inversé.

6. Pièce de raccord avec un purgeur à membrane en élastomère (1) selon au moins l'une quelconque des revendications 1 à 5, **caractérisée en ce que** la garniture de couvercle (90) du chapeau de purge (80) prolonge dans son centre les deux conduits (68,69) au moyen de trous (94),
comporte à son extrémité opposée à la pièce médiane centrale (14) dans la zone de bord radiale des crochets à cran (93) à orientation axiale,
s'enclenche dans les trous oblongs (134) radiaux se trouvant dans la position correspondante de la rondelle entretoise (130),
forme une liaison en permanence fixe amovible entre les composants.

7. Pièce de raccord avec un purgeur à membrane en élastomère (1) selon au moins l'une quelconque des revendications 1 à 6, **caractérisée en ce que** la garniture de couvercle (90) du chapeau de purge (80) à son extrémité opposée à la pièce médiane centrale (14) et
la rondelle (130) de celle-ci à son extrémité tournée vers la pièce médiane centrale (14), comportent respectivement un évidement correspondant (95,135) en forme de disque à orientation axiale,
qui sont aptes ensemble à loger hermétiquement la membrane semi-perméable (110),
les surfaces des évidements représentant respectivement une reproduction de la surface de membrane.

8. Pièce de raccord avec un purgeur à membrane en élastomère (1) selon au moins l'une quelconque des revendications 1 à 7, **caractérisée en ce que** la rondelle entretoise (130) du chapeau de purge (80) comporte autour de son centre des trous de purge en tant que conduit de gaz (133) et possède à son extrémité opposée à la pièce médiane centrale (14) un crochet à cran (132) tourné en direction axiale à extension radiale, qui forme un palier libre (154) en liaison mécanique avec le couvercle à vis (150).

9. Pièce de raccord avec un purgeur à membrane en élastomère (1) selon la revendication 8, **caractérisée en ce que** le couvercle à vis (150) du chapeau de purge (80), logé pouvant tourner par le biais du palier libre (154) produit lors d'un mouvement de rotation sur son filetage intérieur (153) contre le filetage extérieur 2 (66) du corps de base (60) bloqué, un mouvement axial de l'ensemble composé de la rondelle entretoise (130), de la membrane semi-perméable (110) et de la garniture de couvercle (90), dont l'effet évolue par le biais des poussoirs (92) de la garniture de couvercle sur les clapets à bille (70,71) du corps de base (60),
la rondelle entretoise (130) étant enclenchée ne pouvant pas tourner avec la garniture de couvercle (90) et la garniture de couvercle étant logée axialement mobile par le biais de sa saillie (99) dans l'évidement (74) du corps de base (60).

10. Pièce de raccord avec un purgeur à membrane en élastomère (1) selon au moins l'une quelconque des revendications 1 à 9, **caractérisée en ce que** l'extrémité de la pièce d'insertion (40) tournée vers la pièce médiane centrale (14) de l'embout de clapet (30) du purgeur à membrane en élastomère (20) est formée en tant qu'interface mécanique et conforme en étanchéité par rapport à la pièce médiane centrale (14) de la pièce de raccord à 3 voies ou en T (10), tant comme un joint d'étanchéité plat frontal à 2 conduits qu'également comme un joint d'étanchéité cylindrique creux à 2 conduits par plusieurs bagues d'étanchéité disposées axialement et radialement en tant qu'articles du commerce ou une garniture d'étanchéité intérieure et étanchéifiant à l'extérieur en tant que pièce de construction injectée.
